# EUROPÄISCHE PATENTSCHRIFT

(11) **EP 4 556 435 B1**
(45) Veröffentlichungstag und Bekanntmachung des Hinweises auf die Patenterteilung: **31.12.2025**
(21) Anmeldenummer: 23209755.0
(22) Anmeldetag: 14.11.2023
(51) Int. Cl.: C01B 3/32, C01B 3/38, C01B 3/48, C01B 3/52

(54) **VERFAHREN UND ANLAGE ZUM SPEISEN EINES WASSERSTOFFHALTIGEN GASSTROMS IN EINE PIPELINE**
METHOD AND SYSTEM FOR FEEDING A GAS FLOW CONTAINING HYDROGEN INTO A PIPELINE
PROCÉDÉ ET INSTALLATION POUR L'ALIMENTATION D'UN FLUX DE GAZ CONTENANT DE L'HYDROGÈNE DANS UNE CONDUITE

(43) Veröffentlichungstag der Anmeldung: 21.05.2025
(73) Patentinhaber: GasConTec GmbH, 61348 Bad Homburg v. d. Höhe (DE)
(72) Erfinder: Wolff, Balthasar, 40833 Ratingen (DE); Rappold, Dorit, 60437 Frankfurt (DE); Wagner, Ulrich, 06406 Bernburg, OT Biendorf (DE)
(74) Vertreter: Patentanwälte Bauer Vorberg Kayser

(56) Entgegenhaltungen:
- DE-A1- 102016 122 374
- US-A1- 2010 305 220
- US-B1- 9 458 013

## Beschreibung

Die Erfindung betrifft ein Verfahren zum Speisen eines wasserstoffhaltigen Gasstroms in eine Pipeline sowie eine Anlage zum Speisen eines wasserstoffhaltigen Gasstroms in eine Pipeline.

Wasserstoff kann nicht nur als Ausgangsstoff für die Herstellung von Energieträgern wie Ammoniak verwendet werden, sondern stellt auch selbst einen Energieträger dar, welcher nicht nur direkt und ohne Emission von CO2 verbrannt werden kann, sondern beispielsweise auch für Brennstoffzellen eingesetzt werden kann.

Aus DE 10 2016 122 374 A1 ist ein vollintegrierter Ammoniak-Harnstoff-Komplex bekannt, wobei die Edukte zur Harnstoffsynthese ganz aus Anlagen zur Herstellung von Ammoniak bereitgestellt werden können. Eine Einleitung von Wasserstoff in eine Pipeline ist hieraus nicht bekannt.

Aus US 9,458,031 B1 ist ein Verfahren zur Herstellung von Wasserstoff bekannt, wobei der Wasserstoff in eine Pipeline eingespeist werden soll. Die Herstellung eines Hochdruck-Wasserstoffstromes mittels eines Kompressors ist hieraus nicht bekannt.

Eine Schwierigkeit bei der Bereitstellung von Wasserstoff in großen Mengen besteht darin, dass das Gewinnen von Wasserstoff regelmäßig an denjenigen Orten, an denen er eingesetzt werden soll, nicht oder nur unter ungünstigen Bedingungen zu gewinnen ist. So erfordert beispielsweise die Elektrolyse große Mengen an elektrischem Strom, welcher vorzugsweise ohne Emission von CO2 erzeugt werden soll. Da auch die Übertragung von großen Mengen an elektrischer Energie über weite Strecken problematisch ist, wird also vorzugsweise die Elektrolyse dort vorgenommen, wo die emissionsfrei gewonnene Energie zur Verfügung steht - bspw. in der Nähe von großen Wasserkraftwerken - und nicht dort, wo der Wasserstoff gebraucht wird. Derartige große Wasserkraftwerke befinden sich aber regelmäßig nicht in der Nähe von industriellen Zentren.

Neben der Elektrolyse können größere Mengen an Wasserstoff auch aus Synthesegas gewonnen werden, welches wiederum aus Erdgas hergestellt wurde. Auch dieser Vorgang wird vorzugsweise nahe an der Erdgasquelle durchgeführt. Um bei diesem Ansatz einen CO2-Fußabdruck zu erreichen, welcher zur Elektrolyse vergleichbar niedriger oder sogar noch niedriger ist, sind weitergehende Maßnahmen erforderlich wie etwa eine Abtrennung des CO2 vor dem Abtransport sowie eine Einlagerung des CO2, welche vorzugsweise an der Lagerstätte des Erdgases erfolgt. Für beide Gewinnungsarten von Wasserstoff besteht also das Problem, den gewonnenen Wasserstoff auch über eine größere Entfernung dahin transportieren zu können, wo er gebraucht wird. Ein besonders attraktiver Ansatz zum Transport des Wasserstoffs insbesondere über große Entfernungen besteht darin, diesen in eine Pipeline einzuspeisen.

Allerdings muss hierzu der Wasserstoff auf einen hohen Druck gebracht werden. Dies ist bei hochreinem Wasserstoff wegen des geringen Molekulargewichts und der niedrigen Dichte problematisch. Das geringe Molekulargewicht und die niedrige Dichte bewirken, dass allein für eine Druckerhöhung auf beispielsweise 100 bar etwa 10 % des Wärmeinhalts des Wasserstoffstroms für die Druckerhöhung selbst verbraucht werden muss. Weiter können für die Druckerhöhung keine Turbokompressoren verwendet werden, sondern es sind vielmehr eine größere Anzahl von Kolbenkompressoren erforderlich, welche durch ihre Anzahl und ihren komplexeren Aufbau mit höheren Kosten verbunden sind.

Ausgehend vom Stand der Technik besteht daher die Aufgabe der Erfindung darin, eine Lösung bereitzustellen, bei der aus einem Synthesegasstrom, welcher seinerseits aus einem kohlenstoffhaltigen Energieträgerstrom gewonnen wurde, Wasserstoff so gewonnen werden kann, dass er auch ohne den Einsatz von Kolbenkompressoren in eine Pipeline eingespeist werden kann.

Bezogen auf ein Verfahren zum Speisen eines wasserstoffhaltigen Gasstroms in eine Pipeline wird diese Aufgabe durch die Merkmale des Patentanspruch 1 gelöst. Bezogen auf eine Anlage zum Speisen eines wasserstoffhaltigen Gasstroms in eine Pipeline wird diese Aufgabe durch die Merkmale des Patentanspruchs 16 gelöst.

Der Erfindung liegt die Erkenntnis zugrunde, dass eine Druckerhöhung des Synthesegasstroms mit Turbokompressoren dann möglich ist, wenn diese Druckerhöhung prozesstechnisch vor dem Schritt der Kohlenstoffdioxidwäsche erfolgt. Denn vor diesem prozesstechnischen Schritt weist der Synthesegasstrom in ausreichender Menge weitere Bestandteile neben Wasserstoff auf, was gegenüber reinem Wasserstoff die Dichte und das mittlere Molekulargewicht erhöht. Dadurch wird nicht nur der Einsatz von Turbokompressoren abgesichert, sondern es verringert sich unabhängig von der Bauart der Kompressoren darüber hinaus auch aus physikalischen Gründen der Energieaufwand bei der Komprimierung in erheblichem Maße. So ist etwa für die Komprimierung von Methan nur ein Fünftel der Energie gegenüber der Komprimierung von hochreinem Wasserstoff erforderlich. Die sich prozesstechnisch anschließende Kohlenstoffdioxidwäsche kann auch auf diesem erhöhten Druck durchgeführt werden und geht mit einem lediglich geringfügigen Druckverlust einher, sodass der aus der Kohlenstoffdioxidwäsche erhaltene Gasstrom einen für die Einspeisung in die Pipeline ausreichend hohen Druck aufweist.

Das bevorzugte Ausführungsbeispiel des Unteranspruchs 9 betrifft die Möglichkeit, das Synthesegas durch eine autotherme Reformierung zu erzeugen. Bei dieser Variante kann das Synthesegas mit einem höheren Druck erzeugt werden als beispielsweis bei einem Steam Reformer. Entsprechend geringer ist der Aufwand, wenn das Synthesegas auf einen Druck komprimiert werden soll, welcher für die Einspeisung von Wasserstoff in eine Pipeline ausreichen soll.

Die bevorzugten Ausführungsbeispiele der Unteransprüche 10 bis 12 betreffen die Möglichkeit, mehrere Stufen für die Wassergas-Shift-Reaktion vorzusehen. Durch das Vorsehen einer solchen Mehrstufigkeit und insbesondere dadurch, dass die Wassergas-Shift-Reaktion in jeder Stufe in einem jeweils anderen Temperaturbereich stattfindet, kann eine sehr weitgehende Umsetzung des CO in dem Gasstrom in CO2 erreicht werden, welches CO2 dann in der folgenden Stufe der Kohlenstoffdioxidwäsche entfernt werden kann. Im Ergebnis kann der Gasstrom sehr weitgehend von allen Kohlenstoffoxiden gereinigt werden.

Weitere Einzelheiten, Merkmale, Ausgestaltungen, Ziele und Vorteile der vorliegenden Erfindung werden nachfolgend anhand der lediglich Ausführungsbeispiele wiedergebenden Zeichnung erläutert. In der Zeichnung zeigt
- Fig. 1: schematisch das Fließbild einer vorschlagsgemäßen Anlage zur Ausführung des vorschlagsgemäßen Verfahrens gemäß einem ersten Ausführungsbeispiel,
- Fig. 2: schematisch das Fließbild einer vorschlagsgemäßen Anlage zur Ausführung des vorschlagsgemäßen Verfahrens gemäß einem zweiten Ausführungsbeispiel und
- Fig. 3: schematisch das Fließbild einer vorschlagsgemäßen Anlage zur Ausführung des vorschlagsgemäßen Verfahrens gemäß einem dritten Ausführungsbeispiel.

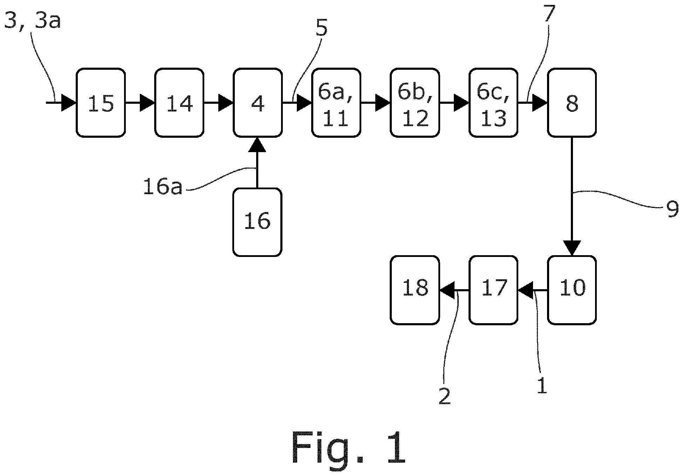

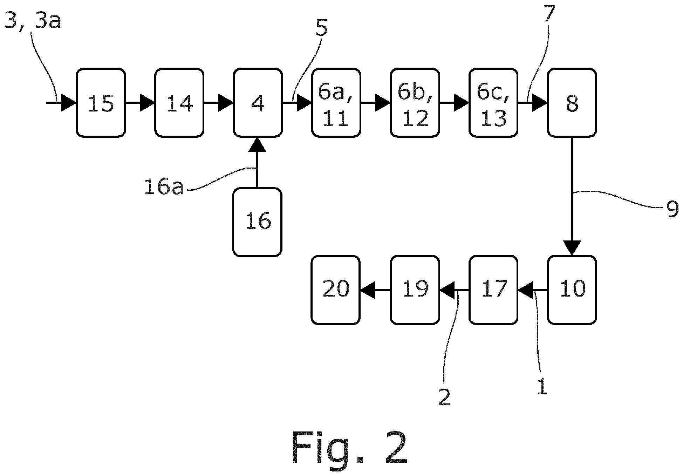

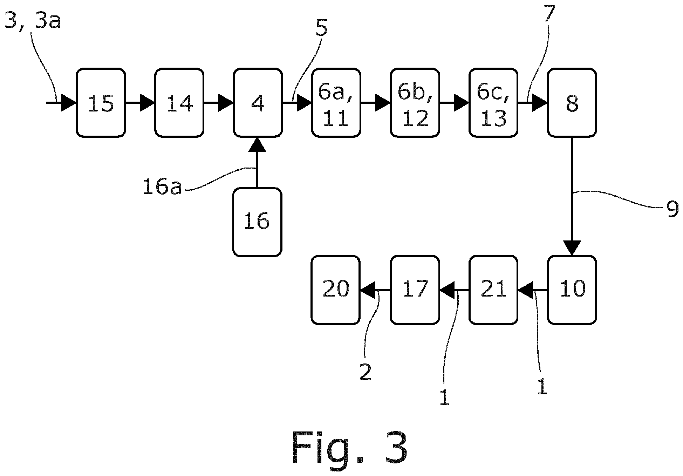

Das vorschlagsgemäße Verfahren, welches zunächst anhand des Ausführungsbeispiels der Fig. 1 beschrieben wird, dient zum Speisen eines wasserstoffhaltigen Gasstroms 1 in eine Pipeline 2, wobei ein kohlenstoffhaltiger Energieträgerstrom 3 einer Synthesegasreaktoranordnung 4 zum Gewinnen eines Frisch-Synthesegasstroms 5 mit Wasserstoff und Kohlenstoffoxiden zugeführt wird. Soweit nicht speziell angegeben, ist das jeweilige Ausführungsbeispiel der Fig. 2 und der Fig. 3 identisch zu demjenigen der Fig. 1. Die jeweiligen Unterschiede werden ausdrücklich benannt.

Grundsätzlich kann es sich bei dem kohlenstoffhaltigen Energieträgerstrom 3 um einen beliebigen solchen Energieträgerstrom handeln. Vorzugsweise handelt es sich bei dem kohlenstoffhaltigen Energieträgerstrom 3 um einen Erdgasstrom 3a, welcher Erdgas umfasst oder im Wesentlichen aus Erdgas besteht. Mit dem Speisen des wasserstoffhaltigen Gasstroms 1 in die Pipeline 2 ist das Einbringen des Gasstroms 1 in die Pipeline 2 zwecks Transport gemeint.

Gemäß dem vorschlagsgemäßen Verfahren wird der Frisch-Synthesegasstrom 5 einer Shiftvorrichtung 6a-c zum Gewinnen eines Shift-Synthesegasstroms 7 zugeführt, wobei in der Shiftvorrichtung 6a-c eine Wassergas-Shift-Reaktion zur Umsetzung zumindest eines Teils des Kohlenstoffmonoxids des Frisch-Synthesegasstroms 5 mit Dampf des Frisch-Synthesegasstroms 5 in Kohlenstoffdioxid und Wasserstoff stattfindet. Bei dem Frisch-Synthesegasstrom 5 muss es sich nicht um das gesamte Synthesegas handeln, welches aus der Synthesegasreaktoranordnung 4 gewonnen wird. Vielmehr kann es sich um einen Teil des aus der Synthesegasreaktoranordnung 4 erhaltenen Synthesegases handeln. Ebenso kann es sein, dass der Frisch-Synthesegasstrom 5 vor Zuführung zu der Shiftvorrichtung 6a-c eine weitere Behandlung erfährt.

Weiter wird gemäß dem vorschlagsgemäßen Verfahren der Shift-Synthesegasstrom 7 einer Kompressoranordnung 8 zur Druckerhöhung und zum Gewinnen eines Hochdruck-Synthesegasstroms 9 zugeführt. Es ist bevorzugt, dass die Kompressoranordnung 8 mindestens einen Turbokompressor umfasst oder aus mindestens einem Turbokompressor besteht. Alternativ oder zusätzlich sein, dass die Kompressoranordnung 8 mindestens einen Zentrifugal-, Axial-, Kolben- oder kombinierten Kolben-und-Axial-Kompressor umfasst oder aus mindestens einem solchen Kompressor besteht.

Vorzugsweise entspricht der Hochdruck-Synthesegasstrom 9 in seiner Zusammensetzung im Wesentlichen dem Shift-Synthesegasstrom 7, weist aber einen höheren Druck auf. Auch bei dem Shift-Synthesegasstrom 7 muss es sich nicht um den gesamten aus der Shiftvorrichtung 6a-c erhaltenen Synthesegasstrom handeln. Ebenso kann vor Zuführung des Shift-Synthesegasstroms 7 zur Kompressoranordnung 8 der Shift-Synthesegasstrom 7 eine zusätzliche Behandlung erfahren.

Vorschlagsgemäß wird der Hochdruck-Synthesegasstrom 9 einer Kohlenstoffdioxidwäsche 10 zum Auswaschen mindestens eines Teiles des Kohlenstoffdioxids aus dem Hochdruck-Synthesegasstrom 9 und zum Erhalten des wasserstoffhaltigen Gasstroms 1 zugeführt. Bei dem Hochdruck-Synthesegasstrom 9 muss es sich nicht um den gesamten aus der Kompressoranordnung 8 erhaltenen Synthesegasstrom handeln. Ebenso kann vor Zuführung des Hochdruck-Synthesegasstroms 9 zur Kohlenstoffdioxidwäsche 10 der Hochdruck-Synthesegasstrom 9 eine zusätzliche Behandlung erfahren.

Schließlich wird der wasserstoffhaltige Gasstrom 1 in die Pipeline 2 gespeist.

Die vorschlagsgemäße Anlage dient dem Speisen des wasserstoffhaltigen Gasstroms 1 in die Pipeline 2, wobei die Anlage die Synthesegasreaktoranordnung 4 zum Gewinnen des Frisch-Synthesegasstroms 5 mit Wasserstoff und Kohlenstoffoxiden aus dem kohlenstoffhaltigen Energieträgerstrom 3 aufweist.

Die vorschlagsgemäße Anlage umfasst weiter die Shiftvorrichtung 6a-c, welcher zum Gewinnen des Shift-Synthesegasstroms 7 der Frisch-Synthesegasstrom 5 zugeführt wird, wobei in der Shiftvorrichtung 6a-c eine Wassergas-Shift-Reaktion zur Umsetzung zumindest eines Teils des Kohlenstoffmonoxids des Frisch-Synthesegasstroms 5 mit Dampf des Frisch-Synthesegasstroms 5 in Kohlenstoffdioxid und Wasserstoff stattfindet.

Ebenso umfasst die vorschlagsgemäße Anlage die Kompressoranordnung 8 zur Druckerhöhung, welcher Kompressoranordnung 8 zum Gewinnen des Hochdruck-Synthesegasstroms 9 der Shift-Synthesegasstrom 7 zugeführt wird und die Kohlenstoffdioxidwäsche 10, welcher zum Erhalten des wasserstoffhaltigen Gasstroms 1 der Hochdruck-Synthesegasstrom 9 zugeführt wird, wobei in der Kohlenstoffdioxidwäsche 10 mindestens ein Teil des Kohlenstoffdioxids aus dem Hochdruck-Synthesegasstrom 9 ausgewaschen wird.

Schließlich umfasst die vorschlagsgemäße Anlage einen Pipelineanschluss 17, welcher der wasserstoffhaltige Strom 1 zum Speisen in die Pipeline 2 zugeführt wird.

Eine bevorzugte Ausführungsform des vorschlagsgemäßen Verfahrens und der vorschlagsgemäßen Anlage ist dadurch gekennzeichnet, dass der wasserstoffhaltige Gasstrom 1 nach Erhalten aus der Kohlenstoffdioxidwäsche 10 druckerhöhungsfrei in die Pipeline 2 gespeist wird. Anders ausgedrückt findet keine Druckerhöhung prozesstechnisch zwischen der Kohlenstoffdioxidwäsche 10 und dem Einspeisen in die Pipeline 2 statt. Insbesondere findet keine Druckerhöhung prozesstechnisch nach der Kompressoranordnung 8 statt. Vorzugsweise findet prozesstechnisch zwischen der Kompressoranordnung 8 und dem Einspeisen in die Pipeline 2 nur ein Absinken des Drucks statt. Damit wird das Vorsehen einer weiteren Kompressorstufe und insbesondere das Vorsehen von Kolbenkompressoren eingespart. Wegen der Gewinnung des wasserstoffhaltigen Gasstroms 1 aus Synthesegas und der Kohlenstoffdioxidwäsche mit Methanol ist vor der Einspeisung in die Pipeline 2 keine zusätzliche Trocknung erforderlich.

Eine weitere bevorzugte Ausführungsform des vorschlagsgemäßen Verfahrens und der vorschlagsgemäßen Anlage ist dadurch gekennzeichnet, dass die Kompressoranordnung 8 den Druck so erhöht, dass der Hochdruck-Synthesegasstrom 9 einen Druck von mindestens 80 bar aufweist. Vorzugsweise weist der Hochdruck-Synthesegasstrom 9 einen Druck von mindestens 100 bar und insbesondere von mindestens 120 bar auf. Es ist weiter bevorzugt, dass ein Druckverlust des wasserstoffhaltigen Gasstroms 1 gegenüber dem Hochdruck-Synthesegasstrom 9 weniger als 10 bar und vorzugsweise weniger als 5 bar beträgt. Auf diese ist der Druck des wasserstoffhaltigen Gasstroms 1 hoch genug, um ohne weitere Druckerhöhung in die Pipeline 2 gespeist werden zu können.

Grundsätzlich kann der wasserstoffhaltige Gasstrom 1 einen beliebigen molaren Anteil an Wasserstoff sowie an anderen Stoffen wie insbesondere Kohlenstoffmonoxid, Kohlenstoffdioxid oder Methan aufweisen. Gemäß einer bevorzugten Ausführungsform des vorschlagsgemäßen Verfahrens und der vorschlagsgemäßen Anlage ist vorgesehen, dass der wasserstoffhaltige Gasstrom 1 einen molaren Anteil an Methan von weniger als 2 % und insbesondere von weniger als 1 % aufweist. Hier kann es auch sein, dass der wasserstoffhaltige Gasstrom 1 einen molaren Anteil an Kohlenstoffmonoxid von weniger als 1 % und weiter insbesondere von weniger als 0,5 % aufweist.

Gemäß einer weiteren bevorzugten Ausführungsform des vorschlagsgemäßen Verfahrens und der vorschlagsgemäßen Anlage ist vorgesehen, dass der wasserstoffhaltige Gasstrom 1 einen molaren Anteil an Kohlenstoffdioxid von weniger als 1 % und insbesondere von weniger als 1 Promille aufweist.

Bevorzugt ist, dass der wasserstoffhaltige Gasstrom einen molaren Anteil an Stickstoff von weniger als 0,5 % aufweist. Ebenso ist es bevorzugt, dass der wasserstoffhaltige Gasstrom einen molaren Anteil an Argon von weniger als 0,2 % aufweist.

Eine bevorzugte Ausführungsform des vorschlagsgemäßen Verfahrens und der vorschlagsgemäßen Anlage ist dadurch gekennzeichnet, dass der wasserstoffhaltige Gasstrom 1 einen molaren Anteil an Wasserstoff von mindestens 98 % und vorzugsweise von mindestens 99 % aufweist.

Durch einen solchen hohen molaren Anteil an Wasserstoff und/oder einen solchen niedrigen molaren Anteil an Kohlenstoffmonoxid, Kohlenstoffdioxid oder Methan im wasserstoffhaltigen Gasstrom 1 kann die Notwendigkeit entfallen, die Reinheit des wasserstoffhaltigen Gasstroms 1 etwa durch eine Druckwechsel-Adsorptionsvorrichtung - auch bezeichnet als Pressure Swing Adsorption oder PSA - zu erhöhen.

Daher ist eine weitere bevorzugte Ausführungsform des vorschlagsgemäßen Verfahrens und der vorschlagsgemäßen Anlage dadurch gekennzeichnet, dass der wasserstoffhaltige Gasstrom 1 im Wesentlichen mit der Zusammensetzung in die Pipeline 2 gespeist wird, mit welcher er aus der Kohlenstoffdioxidwäsche 10 erhalten wurde. Folglich findet dann keine weitere Reinigung des wasserstoffhaltigen Gasstroms 1 prozesstechnisch zwischen der Kohlenstoffdioxidwäsche 10 und dem Einspeisen in die Pipeline 2 statt. Regelmäßig ist der auf diese Weise erreichte Reinheitsgrad an Wasserstoff für die Einspeisung in die Pipeline 2 ausreichend.

Ebenso wird kein Gasstrom mit einer abweichenden Zusammensetzung dem wasserstoffhaltigen Gasstrom 1 prozesstechnisch zwischen der Kohlenstoffdioxidwäsche 10 und dem Einspeisen in die Pipeline 2 zugeführt. Dieses wesentliche Beibehalten der Zusammensetzung aus der Kohlenstoffdioxidwäsche 10 entspricht den ersten beiden Ausführungsbeispielen der Fig. 1 und 2.

Es kann aber ebenso sein, dass der wasserstoffhaltige Strom 1 prozesstechnisch zwischen der Kohlenstoffdioxidwäsche 10 und dem Speisen in die Pipeline 2 einer Hochdruck-Druckwechsel-Adsorptionsvorrichtung 21 zur Erhöhung eines Reinheitsgrads an Wasserstoff zugeführt wird. Dies entspricht dem Ausführungsbeispiel der Fig. 3. Vorzugsweise umfasst die vorschlagsgemäße Anlage in diesem Fall die Hochdruck-Druckwechsel-Adsorptionsvorrichtung 21.

Entsprechend wird beim ersten Ausführungsbeispiel der Fig. 1 der wasserstoffhaltige Gasstrom 1 am entfernten Ende der Pipeline 2 ohne weitere Behandlung für eine Ammoniaksynthese 18 verwendet. Alternativ kann der wasserstoffhaltige Gasstrom 1 auch für die Erzeugung von Strom mit einem geringen CO2-Fußabdruck oder aber für eine chemische Synthese verwendet werden, welche keine sehr hohe Reinheit des Wasserstoffstroms erfordert.

Beim Ausführungsbeispiel der Fig. 2 - welches ansonsten dem Ausführungsbeispiel der Fig. 1 entspricht - und beim Ausführungsbeispiel der Fig. 3 ist ein noch höherer Reinheitsgrad des Wasserstoffs am entfernten Ende der Pipeline 2 gewünscht. Deswegen wird beim Ausführungsbeispiel der Fig. 2 dort der wasserstoffhaltige Gasstrom 1 zunächst einer Druckwechsel-Adsorptionsanlage 19 und anschließend einer Anlage 20 zugeführt wird, in welcher eine chemische Synthese stattfindet, für die ein hoher Reinheitsgrad des Wasserstoffstroms erforderlich ist. Alternativ kann der wasserstoffhaltige Gasstrom 1 auch einem Kraftwerk zugeführt werden, welches besonders hohen Anforderungen an einen niedrigen CO2-Fußabdruck erfüllt.

Beim Ausführungsbeispiel der Fig. 3 hingegen liegt der hohe Reinheitsgrad bereits in der Pipeline 2 vor, weswegen der wasserstoffhaltige Gasstrom 1 aus der Pipeline 2 ohne weitere Behandlung der Anlage 20 zugeführt wird.

Grundsätzlich kann der Frisch-Synthesegasstrom 5 durch ein beliebiges Verfahren in der Synthesegasreaktoranordnung 4 aus dem Energieträgerstrom 3 gewonnen werden. Gemäß einer bevorzugten Ausführungsform des vorschlagsgemäßen Verfahrens und der vorschlagsgemäßen Anlage ist vorgesehen, dass die Synthesegasreaktoranordnung 4 aus dem Energieträgerstrom 3 den Frisch-Synthesegasstrom 5 durch eine autotherme Reformierung gewinnt. Bei der autothermen Reformierung stellt eine insbesondere katalytische partielle Oxidation die für die endothermen Reformierungsreaktionen erforderliche Wärme bereit. Weiter kann bei einer autothermen Reformierung kann Synthesegas mit einem höheren Druck als etwa bei einem Steam-Reforming gewonnen werden, sodass die für die Kompressoranordnung 8 benötigte Leistung geringer ist. Damit sind auch die entsprechenden Kosten niedriger.

Bevorzugt ist weiter, dass bei der autothermen Reformierung in der Synthesegasreaktoranordnung 4 ein molares Dampf-zu-Kohlenstoff-Verhältnis von mindestens 1,5, vorzugsweise von mindestens 1,6, weiter vorzugsweise ein molares Dampf-zu-Kohlenstoff-Verhältnis von mindestens 2 und insbesondere ein molares Dampf-zu-Kohlenstoff-Verhältnis von mindestens 2,4, besteht. Je höher das Dampf-zu-Kohlenstoff-Verhältnis ist, umso geringer ist der Methanslip und umso wirksamer kann Kohlenstoffmonoxid bei einer nachfolgenden Wassergas-Shift-Reaktion in Kohlenstoffdioxid umgewandelt werden. Entsprechend verbleibt durch diese Maßnahmen auch weniger Methan im wasserstoffhaltigen Gasstrom 1 in der Pipeline 2. Auf diese Weise kann also auch ohne Hochdruck-Druckwechsel-Adsorptionsvorrichtung eine hohe Reinheit an Wasserstoff erreicht werden.

Die nachstehende Tabelle gibt verschiedene Prozessparameter wieder, die sich bei unterschiedlichen molaren Dampf-zu-Kohlenstoff-Verhältnissen und einer bei 65 bar betriebenen autothermen Reformierung einstellen.

| | | | | | | |
|---|---|---|---|---|---|---|
| Dampf/C Verhältnis | 1,2 | 1,6 | 2,0 | 2,4 | 2,8 | 3,0 |
| CH₄ Slip % | 3,5% | 2,5% | 1,6% | 1,2% | 0,9% | 0,8% |

| Ausgang ATR trocken | | | | | | |
|---|---|---|---|---|---|---|
| CO₂ mol/mol | 0,083 | 0,095 | 0,107 | 0,118 | 0,129 | 0,134 |
| CO mol/mol | 0,230 | 0,218 | 0,206 | 0,195 | 0,183 | 0,179 |
| H₂ mol/mol | 0,651 | 0,661 | 0,668 | 0,673 | 0,677 | 0,680 |

Erkennbar ist, dass sich mit höherem Dampf-zu-Kohlenstoff-Verhältnis der Methanslip verringert. Ebenso erhöht sich der Anteil an Kohlenstoffdioxid und von Wasserstoff gegenüber dem von Kohlenstoffmonoxid im Synthesegas

Grundsätzlich kann es sein, dass der Frisch-Synthesegasstrom 5 nur einer einzelnen Shiftvorrichtung 6a-c zugeführt wird. Gemäß einer weiteren bevorzugten Ausführungsform des vorschlagsgemäßen Verfahrens und der vorschlagsgemäßen Anlage ist zur weiteren Erhöhung der Reinheit des wasserstoffhaltigen Gasstroms 1 vorgesehen, dass der Frisch-Synthesegasstrom 5 einer Vielzahl von, vorzugsweise prozesstechnisch beabstandet angeordneten, Shiftvorrichtungen 6a-c zugeführt wird und dass in den Shiftvorrichtungen 6a-c jeweils eine Wassergas-Shift-Reaktion zur Umsetzung zumindest eines Teils des Kohlenstoffmonoxids des Frisch-Synthesegasstroms 5 mit Dampf des Frisch-Synthesegasstroms 5 in Kohlenstoffdioxid und Wasserstoff stattfindet. Auf diese Weise kann der Anteil des in Kohlenstoffdioxid umgewandelten Kohlenstoffmonoxids gegenüber der Verwendung nur einer Shiftvorrichtung erhöht werden. Vorzugsweise umfasst die vorschlagsgemäße Anlage die Vielzahl von Shiftvorrichtungen 6a-c.

Eine prozesstechnische beabstandete Anordnung der Shiftvorrichtungen 6a-c bedeutet, dass prozesstechnisch zwischen zwei Shiftvorrichtungen 6a-c mindestens eine weitere Vorrichtung angeordnet ist, bei welcher es sich nicht um eine Shiftvorrichtung 6a-c handelt. Auf diese Weise ist es möglich, den Frisch-Synthesegasstrom 5 von einer Shiftvorrichtung 6a-c zur nächsten auf eine jeweils andere angepasste Temperatur zu bringen.

Grundsätzlich kann es sein, dass in der Vielzahl der Shiftvorrichtungen 6a-c im Wesentlichen identische Prozessparameter und insbesondere Temperaturen vorliegen. Eine bevorzugte Ausführungsform des vorschlagsgemäßen Verfahrens und der vorschlagsgemäßen Anlage ist jedoch dadurch gekennzeichnet, dass in den Shiftvorrichtungen 6a-c die Wassergas-Shift-Reaktion jeweils in einem in Prozessrichtung abnehmenden Temperaturbereich stattfindet. Mit anderen Worten ist die Temperatur in einer prozesstechnisch nachgelagerten Shiftvorrichtung 6a-c niedriger gegenüber einer prozesstechnisch vorgelagerten Shiftvorrichtung 6a-c.

Eine weitere bevorzugte Ausführungsform des vorschlagsgemäßen Verfahrens und der vorschlagsgemäßen Anlage ist dadurch gekennzeichnet, dass die Shiftvorrichtungen 6a-c eine HT-Shiftvorrichtung 11 für eine Hochtemperatur-Wassergas-Shift-Reaktion und eine MT-Shiftvorrichtung 12 für eine Mitteltemperatur-Wassergas-Shift-Reaktion umfassen. Bevorzugt ist weiter, dass die Shiftvorrichtungen 6a-c eine NT-Shiftvorrichtung 13 für eine Niedertemperatur-Wassergas-Shift-Reaktion umfassen. Dabei ist die MT-Shiftvorrichtung 12 prozesstechnisch der HT-Shiftvorrichtung 11 nachgelagert.

Die Hochtemperatur-Wassergas-Shift-Reaktion findet bei einer Temperatur zwischen 300° C und 450° C statt. Die Mitteltemperatur-Wassergas-Shift-Reaktion findet bei einer Temperatur zwischen 220° C und 270° C statt. Die Niedertemperatur-Wassergas-Shift-Reaktion findet bei einer Temperatur zwischen 180° C und 250° C statt. Die Hochtemperatur-Wassergas-Shift-Reaktion hat für die Umwandlung in CO2 zwar ein schlechteres Reaktionsgleichgewicht, aber eine bessere Reaktionsgeschwindigkeit. Das hohe molares Dampf-zu-Kohlenstoff-Verhältnis verbessert das Reaktionsgleichgewicht. Durch diese Kaskadierung der Shiftvorrichtungen 6a-c kann zunächst ein rascher Abbau von Kohlenstoffmonoxid erreicht werden, wobei die nachfolgenden Stufen sukzessive die verbliebenen Reste an Kohlenstoffmonoxid umwandeln. Da die Konzentration des Kohlenstoffmonoxids bereits verringert wurde, kann auch eine längere Reaktionszeit in Kauf genommen werden.

Grundsätzlich kann das Kohlenstoffdioxid in der Kohlenstoffdioxidwäsche 10 durch einen beliebigen Ansatz ausgewaschen werden. Vorzugsweise handelt es sich bei der Kohlenstoffdioxidwäsche 10 um eine physikalische Wäsche. Es kann aber auch sein, dass es sich bei der Kohlenstoffdioxidwäsche 10 um eine chemische Wäsche handelt. Gemäß einer bevorzugten Ausführungsform des vorschlagsgemäßen Verfahrens und der vorschlagsgemäßen Anlage ist es vorgesehen, dass in der Kohlenstoffdioxidwäsche 10 das Kohlenstoffdioxid durch ein Methanol umfassendes Waschmedium ausgewaschen wird.

Gemäß einer weiteren bevorzugten Ausführungsform des vorschlagsgemäßen Verfahrens und der vorschlagsgemäßen Anlage ist es vorgesehen, dass der Energieträgerstrom 3 vor Zuführung zur Synthesegasreaktoranordnung 4 einer Sättigungsstufe 14 zugeführt wird, in welcher Sättigungsstufe 14 dem Energieträgerstrom 3 vorgewärmtes Kondensat zugeführt wird. Auf diese Weise kann die für das Erzeugen des Synthesegases geeignete Stöchiometrie erreicht werden. Vorzugsweise umfasst die vorschlagsgemäße Anlage die Sättigungsstufe 14.

Eine bevorzugte Ausführungsform des vorschlagsgemäßen Verfahrens und der vorschlagsgemäßen Anlage ist dadurch gekennzeichnet, dass die Synthesegasreaktoranordnung 4 einen Pre-Reformer zum Aufspalten von Kohlenwasserstoffen mit mindestens zwei Kohlenstoffatomen in Methan aufweist. Weiter ist bevorzugt, dass der Energieträgerstrom 3 vor Zuführung zur Sättigungsstufe 14 einer Entschwefelungsstufe 15 zur Entschwefelung des Energieträgerstroms 3 zugeführt wird. Vorzugsweise umfasst die vorschlagsgemäße Anlage die Entschwefelungsstufe 15.

Vorzugsweise erfolgt in dem Pre-Reformer eine adiabatische Dampfreformierung über einem nickelbasierten Katalysator. Es ist bevorzugt, dass das Gewinnen des Frisch-Synthesegasstroms 5 aus der autothermen Reformierung und dem Pre-Reforming in dem Pre-Reformer besteht. Dementsprechend findet dann keine herkömmliche Dampfreformierung bei dem Gewinnen des Frisch-Synthesegasstroms 5 statt.

Eine weitere bevorzugte Ausführungsform des vorschlagsgemäßen Verfahrens und der vorschlagsgemäßen Anlage ist dadurch gekennzeichnet, dass ein Sauerstoffstrom 16a aus einer Sauerstoffgewinnungsanordnung 16 der Synthesegasreaktoranordnung 4 zum Gewinnen des Frisch-Synthesegasstroms 5 zugeführt wird. Vorzugsweise umfasst die vorschlagsgemäße Anlage die Sauerstoffgewinnungsanordnung 16. Hier ist weiter bevorzugt, dass die Synthesegasreaktoranordnung 4 aus dem Energieträgerstrom 3 den Frisch-Synthesegasstrom 5 durch eine autotherme Reformierung mit dem Sauerstoffstrom 16a gewinnt. Durch die Verwendung von Sauerstoff anstelle von Umgebungsluft kann der Anteil an Stickstoff im Frisch-Synthesegasstrom 5 wesentlich verringert werden. Das erleichtert es, einen hohen Anteil an Wasserstoff im wasserstoffhaltigen Gasstrom 1 zu erreichen.

Vorstehend beschriebene bevorzugte Ausgestaltungen, Merkmale und Eigenschaften des vorschlagsgemäßen Verfahrens entsprechen bevorzugten Ausgestaltungen, Merkmalen und Eigenschaften der vorschlagsgemäßen Anlage und umgekehrt.

## Patentansprüche

1. Verfahren zum Speisen eines wasserstoffhaltigen Gasstroms (1) in eine Pipeline (2), wobei ein kohlenstoffhaltiger Energieträgerstrom (3) einer Synthesegasreaktoranordnung (4) zum Gewinnen eines Frisch-Synthesegasstroms (5) mit Wasserstoff und Kohlenstoffoxiden zugeführt wird, wobei der Frisch-Synthesegasstrom (5) einer Shiftvorrichtung (6a-c) zum Gewinnen eines Shift-Synthesegasstroms (7) zugeführt wird, wobei in der Shiftvorrichtung (6a-c) eine Wassergas-Shift-Reaktion zur Umsetzung zumindest eines Teils des Kohlenstoffmonoxids des Frisch-Synthesegasstroms (5) mit Dampf des Frisch-Synthesegasstroms (5) in Kohlenstoffdioxid und Wasserstoff stattfindet, wobei der Shift-Synthesegasstrom (7) einer Kompressoranordnung (8) zur Druckerhöhung und zum Gewinnen eines Hochdruck-Synthesegasstroms (9) zugeführt wird, wobei der Hochdruck-Synthesegasstrom (9) einer Kohlenstoffdioxidwäsche (10) zum Auswaschen mindestens eines Teiles des Kohlenstoffdioxids aus dem Hochdruck-Synthesegasstrom (9) und zum Erhalten des wasserstoffhaltigen Gasstroms (1) zugeführt wird und wobei der wasserstoffhaltige Gasstrom (1) in die Pipeline (2) gespeist wird.

2. Verfahren nach Anspruch 1, **dadurch gekennzeichnet, dass** der wasserstoffhaltige Gasstrom (1) nach Erhalten aus der Kohlenstoffdioxidwäsche (10) druckerhöhungsfrei in die Pipeline (2) gespeist wird.

3. Verfahren nach Anspruch 1 oder 2, **dadurch gekennzeichnet, dass** die Kompressoranordnung (8) den Druck so erhöht, dass der Hochdruck-Synthesegasstrom (9) einen Druck von mindestens 80 bar, vorzugsweise von mindestens 100 bar und insbesondere von mindestens 120 bar aufweist.

4. Verfahren nach einem der Ansprüche 1 bis 3, **dadurch gekennzeichnet, dass** der wasserstoffhaltige Gasstrom (1) einen molaren Anteil an Methan von weniger als 2 % und insbesondere von weniger als 1 % aufweist, vorzugsweise, dass der wasserstoffhaltige Gasstrom (1) einen molaren Anteil an Kohlenstoffmonoxid von weniger als 1 % und weiter insbesondere von weniger als 0,5 % aufweist.

5. Verfahren nach einem der Ansprüche 1 bis 4, **dadurch gekennzeichnet, dass** der wasserstoffhaltige Gasstrom (1) einen molaren Anteil an Kohlenstoffdioxid von weniger als 1 % und insbesondere von weniger als 1 Promille aufweist.

6. Verfahren nach einem der Ansprüche 1 bis 5, **dadurch gekennzeichnet, dass** der wasserstoffhaltige Gasstrom (1) einen molaren Anteil an Wasserstoff von mindestens 98 % und vorzugsweise von mindestens 99 % aufweist.

7. Verfahren nach einem der Ansprüche 1 bis 6, **dadurch gekennzeichnet, dass** der wasserstoffhaltige Gasstrom (1) mit der Zusammensetzung in die Pipeline (2) gespeist wird, mit welcher er aus der Kohlenstoffdioxidwäsche (10) erhalten wurde.

8. Verfahren nach einem der Ansprüche 1 bis 6, **dadurch gekennzeichnet, dass** der wasserstoffhaltige Gasstrom (1) prozesstechnisch zwischen der Kohlenstoffdioxidwäsche (10) und dem Speisen in die Pipeline (2) einer Hochdruck-Druckwechsel-Adsorptionsvorrichtung (21) zur Erhöhung eines Reinheitsgrads an Wasserstoff zugeführt wird

9. Verfahren nach einem der Ansprüche 1 bis 8, **dadurch gekennzeichnet, dass** die Synthesegasreaktoranordnung (4) aus dem Energieträgerstrom (3) den Frisch-Synthesegasstrom (5) durch eine autotherme Reformierung gewinnt.

10. Verfahren nach einem der Ansprüche 1 bis 9, **dadurch gekennzeichnet, dass** der Frisch-Synthesegasstrom (5) einer Vielzahl von, vorzugsweise prozesstechnisch beabstandet angeordneten, Shiftvorrichtungen (6a-c) zugeführt wird und dass in den Shiftvorrichtungen (6a-c) jeweils eine Wassergas-Shift-Reaktion zur Umsetzung zumindest eines Teils des Kohlenstoffmonoxids des Frisch-Synthesegasstroms (5) mit Dampf des Frisch-Synthesegasstroms (5) in Kohlenstoffdioxid und Wasserstoff stattfindet.

11. Verfahren nach Anspruch 10, **dadurch gekennzeichnet, dass** in den Shiftvorrichtungen (6a-c) die Wassergas-Shift-Reaktion jeweils in einem in Prozessrichtung abnehmenden Temperaturbereich stattfindet.

12. Verfahren nach Anspruch 11, **dadurch gekennzeichnet, dass** die Shiftvorrichtungen (6a-c) eine HT-Shiftvorrichtung (11) für eine Hochtemperatur-Wassergas-Shift-Reaktion und eine MT-Shiftvorrichtung (12) für eine Mitteltemperatur-Wassergas-Shift-Reaktion umfassen, vorzugsweise, dass die Shiftvorrichtungen (6a-c) eine NT-Shiftvorrichtung (13) für eine Niedertemperatur-Wassergas-Shift-Reaktion umfassen.

13. Verfahren nach einem der Ansprüche 1 bis 12, **dadurch gekennzeichnet, dass** in der Kohlenstoffdioxidwäsche (30) das Kohlenstoffdioxid durch ein Methanol umfassendes Waschmedium ausgewaschen wird.

14. Verfahren nach einem der Ansprüche 1 bis 13, **dadurch gekennzeichnet, dass** der Energieträgerstrom (3) vor Zuführung zur Synthesegasreaktoranordnung (4) einer Sättigungsstufe (11) zugeführt wird, in welcher Sättigungsstufe (11) dem Energieträgerstrom (3) vorgewärmtes Kondensat (12), welches in der Anlage (2) angefallen ist, zugeführt wird

15. Verfahren nach einem der Ansprüche 1 bis 14, **dadurch gekennzeichnet, dass** die Synthesegasreaktoranordnung (4) einen Pre-Reformer (13) zum Aufspalten von Kohlenwasserstoffen mit mindestens zwei Kohlenstoffatomen in Methan aufweist, vorzugsweise, dass der Energieträgerstrom (3) vor Zuführung zur Sättigungsstufe (11) einer Entschwefelungsstufe (13) zur Entschwefelung des Energieträgerstroms (3) zugeführt wird.

16. Anlage zum Speisen eines wasserstoffhaltigen Gasstroms (1) in eine Pipeline (2) gemäß einem der vorstehenden Ansprüche 1 bis 15, welche Anlage eine Synthesegasreaktoranordnung (4) zum Gewinnen eines Frisch-Synthesegasstroms (5) mit Wasserstoff und Kohlenstoffoxiden aus einem kohlenstoffhaltigen Energieträgerstrom (3) aufweist, eine Shiftvorrichtung (6a-c) aufweist, wobei die Shiftvorrichtung (6a-6c) so konfiguriert ist, dass dieser zum Gewinnen eines Shift-Synthesegasstroms (7) der Frisch-Synthesegasstrom (5) zugeführt wird, wobei die Shiftvorrichtung (6a-6c) so konfiguriert ist, dass in der Shiftvorrichtung (6a-c) eine Wassergas-Shift-Reaktion zur Umsetzung zumindest eines Teils des Kohlenstoffmonoxids des Frisch-Synthesegasstroms (5) mit Dampf des Frisch-Synthesegasstroms (5) in Kohlenstoffdioxid und Wasserstoff stattfindet, eine Kompressoranordnung (8) zur Druckerhöhung aufweist, wobei die Kompressoranordnung (8) so konfiguriert ist, dass dieser zum Gewinnen eines Hochdruck-Synthesegasstroms (9) der Shift-Synthesegasstrom (7) zugeführt wird, eine Kohlenstoffdioxidwäsche (10) aufweist, wobei die Kohlenstoffdioxidwäsche (10) so konfiguriert ist, dass dieser zum Erhalten des wasserstoffhaltigen Gasstroms (1) der Hochdruck-Synthesegasstrom (9) zugeführt wird, wobei in der Kohlenstoffdioxidwäsche (10) mindestens ein Teil des Kohlenstoffdioxids aus dem Hochdruck-Synthesegasstrom (9) ausgewaschen wird und einen Pipelineanschluss (17) aufweist, welcher derart konfiguriert ist, dass der wasserstoffhaltige Strom (1) zum Speisen in die Pipeline (2) zugeführt wird.

## Claims

1. A method for feeding a hydrogen-containing gas stream (1) into a pipeline (2), wherein a carbon-containing energy source stream (3) is fed to a synthesis gas reactor arrangement (4) for recovering a fresh synthesis gas stream (5) with hydrogen and carbon oxides, wherein the fresh synthesis gas stream (5) is fed to a shift device (6a-c) for obtaining a shift synthesis gas stream (7), wherein a water-gas shift reaction takes place in the shift device (6a-c) for converting at least some of the carbon monoxide of the fresh synthesis gas stream (5) with vapour of the fresh synthesis gas stream (5) into carbon dioxide and hydrogen, wherein the shift synthesis gas stream (7) is fed to a compressor arrangement (8) for increasing the pressure and for obtaining a high-pressure synthesis gas stream (9), wherein the high-pressure synthesis gas stream (9) is fed to a carbon dioxide scrubber (10) for washing out at least some of the carbon dioxide from the high-pressure synthesis gas stream (9) and for obtaining the hydrogen-containing gas stream (1), and wherein the hydrogen-containing gas stream (1) is fed into the pipeline (2).

2. The method according to claim 1, **characterised in that** the hydrogen-containing gas stream (1), after being obtained from the carbon dioxide scrubber (10), is fed into the pipeline (2) without increasing the pressure.

3. The method according to claim 1 or 2, **characterised in that** the compressor arrangement (8) increases the pressure so that the high-pressure synthesis gas stream (9) has a pressure of at least 80 bar, preferably of at least 100 bar, and in particular of at least 120 bar.

4. The method according to any one of claims 1 to 3, **characterised in that** the hydrogen-containing gas stream (1) has a molar proportion of methane of less than 2% and in particular of less than 1%, preferably in that the hydrogen-containing gas stream (1) has a molar proportion of carbon monoxide of less than 1% and further in particular of less than 0.5%.

5. The method according to any one of claims 1 to 4, **characterised in that** the hydrogen-containing gas stream (1) has a molar proportion of carbon dioxide of less than 1% and in particular of less than 1 per mille.

6. The method according to any one of claims 1 to 5, **characterised in that** the hydrogen-containing gas stream (1) has a molar proportion of hydrogen of at least 98% and preferably of at least 99%.

7. The method according to any one of claims 1 to 6, **characterised in that** the hydrogen-containing gas stream (1) is fed into the pipeline (2) substantially with the composition with which it was obtained from the carbon dioxide scrubber (10).

8. The method according to any one of claims 1 to 6, **characterised in that** the hydrogen-containing gas stream (1) is fed, within the process between the carbon dioxide scrubber (10) and the feed into the pipeline (2), to a high-pressure pressure swing adsorption device (21) to increase a degree of purity of hydrogen.

9. The method according to any one of claims 1 to 8, **characterised in that** the synthesis gas reactor arrangement (4) obtains the fresh synthesis gas stream (5) from the energy source stream (3) by autothermal reforming.

10. The method according to any one of claims 1 to 9, **characterised in that** the fresh synthesis gas stream (5) is fed to a plurality of shift devices (6a-c), preferably arranged at a distance from one another within the process, and **in that** a water-gas shift reaction for converting at least some of the carbon monoxide of the fresh synthesis gas stream (5) with vapour of the fresh synthesis gas stream (5) into carbon dioxide and hydrogen takes place in each of the shift devices (6a-c).

11. The method according to claim 10, **characterised in that** the water-gas shift reaction takes place in the shift devices (6a-c) in each case in a temperature range which decreases in the process direction.

12. The method according to claim 11, **characterised in that** the shift devices (6a-c) comprise a HT shift device (11) for a high temperature water-gas shift reaction and an MT shift device (12) for a medium-temperature water-gas shift reaction, preferably **in that** the shift devices (6a-c) comprise an LT shift device (13) for a low-temperature water-gas shift reaction.

13. The method according to any one of claims 1 to 12, **characterised in that** in the carbon dioxide scrubber (30) the carbon dioxide is washed out by a scrubbing medium comprising methanol.

14. The method according to any one of claims 1 to 13, **characterised in that** the energy source stream (3) is fed to a saturation stage (11) before being fed to the synthesis gas reactor arrangement (4), in which saturation stage (11) preheated condensate (12), which has accumulated in the system (2), is fed to the energy source stream (3).

15. The method according to any one of claims 1 to 14, **characterised in that** the synthesis gas reactor arrangement (4) has a pre-reformer (13) for splitting hydrocarbons having at least two carbon atoms into methane, preferably **in that** the energy source stream (3) is fed to a desulphurisation stage (13) for desulphurising the energy source stream (3) before being fed to the saturation stage (11).

16. A system for feeding a hydrogen-containing gas stream (1) into a pipeline (2), according to one of the preceding claims 1 to 15,which system comprises a synthesis gas reactor arrangement (4) for obtaining a fresh synthesis gas stream (5) with hydrogen and carbon oxides from a carbon-containing energy source stream (3), a shift device (6a-c), wherein the shift device (6a-6c) is configured such that it is fed the fresh synthesis gas stream (5) in order to obtain a shift synthesis gas stream (7), wherein the shift device (6a-6c) is configured such that a water-gas shift for converting at least some of the carbon monoxide of the fresh synthesis gas stream (5) with vapour of the fresh synthesis gas stream (5) into carbon dioxide and hydrogen takes place in the shift device (6a-c), a compressor arrangement (8) for increasing the pressure, wherein the compressor arrangement (8) is configured such that it is fed the shift synthesis gas stream (7) in order to obtain a high-pressure synthesis gas stream (9), a carbon dioxide scrubber (10), wherein the carbon dioxide scrubber (10) is configured such that it is supplied with the high-pressure synthesis gas stream (9) in order to obtain the hydrogen-containing gas stream (1), wherein at least some of the carbon dioxide is washed out of the high-pressure synthesis gas stream (9) in the carbon dioxide scrubber (10) and has a pipeline connection (17), which is configured such that it is fed the hydrogen-containing stream (1) for feeding into the pipeline (2).

## Revendications

1. Procédé d'introduction d'un flux de gaz contenant de l'hydrogène (1) dans du gazoduc (2), consistant à acheminer un flux d'un vecteur d'énergie carboné (3) vers un système de réacteur de gaz de synthèse (4) afin d'obtenir un flux de gaz de synthèse nouveau (5) comportant de l'hydrogène et des oxydes de carbone, le flux de gaz de synthèse nouveau (5) étant acheminé vers un dispositif de réaction du gaz à l'eau (6a-c) afin d'obtenir un flux de gaz de synthèse issu de la réaction du gaz à l'eau (7), une réaction du gaz à l'eau se déroulant dans le dispositif de réaction du gaz à l'eau (6a-c) afin de transformer au moins une partie du monoxyde de carbone issu du flux de gaz de synthèse nouveau (5) en dioxyde de carbone et en hydrogène au moyen de la vapeur issue du flux de gaz de synthèse nouveau (5), le flux de gaz de synthèse issu de la réaction du gaz à l'eau (7) étant acheminé vers un système de compresseur (8) afin d'augmenter la pression et obtenir un flux de gaz de synthèse sous haute pression (9), le flux de gaz de synthèse sous haute pression (9) étant acheminé vers un organe de lavage de dioxyde de carbone (10) afin de retirer, par lavage, au moins une partie du dioxyde de carbone contenu dans le flux de gaz de synthèse sous haute pression (9) et de conserver le flux de gaz contenant de l'hydrogène (1), et le flux de gaz contenant de l'hydrogène (1) étant introduit dans le gazoduc (2).

2. Procédé selon la revendication 1, **caractérisé en ce que** le flux de gaz contenant de l'hydrogène (1) est introduit, suite à son obtention à l'issue de l'organe de lavage de dioxyde de carbone (10), dans le gazoduc (2) sans augmentation de pression.

3. Procédé selon les revendications 1 ou 2, **caractérisé en ce que** le système de compresseur (8) augmente la pression de manière à ce que le flux de gaz de synthèse sous haute pression (9) présente une pression d'au moins 80 bar, préférentiellement d'au moins 100 bar et notamment d'au moins 120 bar.

4. Procédé selon l'une revendications 1 à 3, **caractérisé en ce que** le flux de gaz contenant de l'hydrogène (1) comporte une proportion molaire de méthane inférieure à 2 % et notamment inférieure à 1 %, et que le flux de gaz contenant de l'hydrogène (1) comporte préférentiellement une proportion molaire de monoxyde de carbone inférieure à 1 % et plus particulièrement inférieure à 0,5 %.

5. Procédé selon l'une des revendications 1 à 4, **caractérisé en ce que** le flux de gaz contenant de l'hydrogène (1) comporte une proportion molaire de dioxyde de carbone inférieure à 1 % et notamment inférieure à 1 pour mille.

6. Procédé selon l'une des revendications 1 à 5, **caractérisé en ce que** le flux de gaz contenant de l'hydrogène (1) comporte une proportion molaire de d'hydrogène supérieure ou égale à 98 % et préférentiellement supérieure ou égale à 99 %.

7. Procédé selon l'une des revendications 1 à 6, **caractérisé en ce que** le flux de gaz contenant de l'hydrogène (1) est introduit dans le gazoduc (2) en ayant la composition avec laquelle il a été obtenu à l'issue de l'organe de lavage de dioxyde de carbone (10) .

8. Procédé selon l'une des revendications 1 bis 6, **caractérisé en ce que** le processus est mis en œuvre de manière à ce que le flux contenant de l'hydrogène (1) soit acheminé, entre l'organe de lavage de dioxyde de carbone (10) et son introduction dans le gazoduc (2), vers un dispositif d'adsorption par inversion de pression (21) afin d'augmenter le degré de pureté de l'hydrogène.

9. Procédé selon l'une des revendications 1 à 8, **caractérisé en ce que** le système de réacteur de gaz de synthèse (4) permet d'obtenir, par reformage autothermique, le flux de gaz de synthèse nouveau (5) à partir du flux de vecteur d'énergie (3).

10. Procédé selon l'une des revendications 1 à 9, **caractérisé en ce que** le flux de gaz de synthèse nouveau (5) est acheminé vers une pluralité de dispositifs de réaction du gaz à l'eau (6a-c) lesquels sont préférentiellement disposés de manière à être espacés les uns des autres au cours du processus, et que au sein de chacun des dispositifs de réaction du gaz à l'eau (6a-c), il se déroule une réaction du gaz à l'eau visant à transformer au moins une partie du monoxyde de carbone issu du flux de gaz de synthèse nouveau (5) en dioxyde de carbone et hydrogène au moyen de la vapeur contenue dans le flux de gaz de synthèse nouveau (5).

11. Procédé selon la revendication 10, **caractérisé en ce qu'**au sein des différents dispositifs de réaction du gaz à l'eau (6a-c), la réaction du gaz à l'eau se déroule dans une gamme de températures que diminue progressivement le long du processus.

12. Procédé selon la revendication 11, **caractérisé en ce que** les dispositifs de réaction du gaz à l'eau (6a-c) comprennent un dispositif de réaction du gaz à l'eau HT (11) destiné à une réaction du gaz à l'eau à haute température, et un dispositif de réaction du gaz à l'eau MT (12) destiné à une réaction du gaz à l'eau à température moyenne, et que les dispositifs de réaction du gaz à l'eau (6a-c) comprennent préférentiellement un dispositif de réaction du gaz à l'eau NT (13) destiné à une réaction du gaz à l'eau à basse température.

13. Procédé selon l'une des revendications 1 à 12, **caractérisé en ce qu'**au sein de l'organe de lavage de dioxyde de carbone (30), le dioxyde de carbone est retiré par lavage avec un milieu de lavage comprenant du méthanol.

14. Procédé selon l'une des revendications 1 à 13, **caractérisé en ce que** le flux de vecteur d'énergie (3) est acheminé, en amont de son acheminement vers le système de réacteur de gaz de synthèse (4), vers un étage de saturation (11), l'étage de saturation (11) permettant introduire dans le flux de vecteur d'énergie (3) du condensat préchauffé (12) qui est issu de l'installation (2).

15. Procédé selon l'une des revendications 1 à 14, **caractérisé en ce que** le système de réacteur de gaz de synthèse (4) comporte un organe de pré-reformage (13) permettant de fractionner en méthane des hydrocarbures renfermant au moins deux atomes de carbone, et que le flux de vecteur d'énergie (3) est acheminé, en amont de son acheminement vers l'étage de saturation (11), vers un étage de désulfurisation (13) afin de désulfuriser le flux de vecteur d'énergie (3).

16. Installation permettant d'introduire un flux de gaz contenant de l'hydrogène (1) dans un gazoduc (2) selon l'une des revendications précédentes 1 à 15, ladite installation comportant un système de réacteur de gaz de synthèse (4) permettant d'obtenir un flux de gaz de synthèse nouveau (5) contenant de l'hydrogène et des oxydes de carbone à partir d'un flux de vecteur d'énergie carboné (3), et comportant un dispositif de réaction du gaz à l'eau (6a-c), le dispositif de réaction du gaz à l'eau (6a-6c) étant configuré de manière à ce que le flux de gaz de synthèse nouveau (5) y soit acheminé afin d'obtenir un flux de gaz de synthèse issu de la réaction du gaz à l'eau (7), le dispositif de réaction du gaz à l'eau (6a-6c) étant configuré de manière à ce qu'une réaction du gaz à l'eau se déroule dans le dispositif de réaction du gaz à l'eau (6a-c) afin de transformer au moins une partie du monoxyde de carbone issu du flux de gaz de synthèse nouveau (5) en dioxyde de carbone et en hydrogène au moyen de la vapeur issue du flux de gaz de synthèse nouveau (5), et comportant un système de compresseur (8) afin d'augmenter la pression, le système de compresseur (8) étant configuré de manière à ce que le flux de gaz de synthèse issu de la réaction du gaz à l'eau (7) y soit acheminé afin d'obtenir un flux de gaz de synthèse sous haute pression (9), et comportant un organe de lavage de dioxyde de carbone (10), l'organe de lavage de dioxyde de carbone (10) étant configuré de manière à ce que le flux de gaz de synthèse haute pression (9) y soit acheminé afin d'obtenir un flux de gaz contenant de l'hydrogène (1), au moins une partie du dioxyde de carbone contenu dans le flux de gaz de synthèse sous haute pression (9) étant retirée, par lavage, dans l'organe de lavage de dioxyde de carbone (10), et comportant un raccordement de gazoduc (17) permettant d'introduire le flux de gaz contenant de l'hydrogène (1) dans le gazoduc (2).
